# EUROPEAN PATENT APPLICATION

(11) **EP 4 760 215 A1**
(43) Date of publication of application: **17.06.2026**
(21) Application number: 23950361.8
(22) Date of filing: 20.09.2023
(51) Int. Cl.: G01D 11/00

(54) **DETECTION DEVICE, BATTERY AND ELECTRIC DEVICE**

(30) Priority: 29.08.2023 CN 202311094730
(71) Applicant: Contemporary Amperex Technology Co., Limited, Ningde, Fujian 352100 (CN)
(72) Inventor: WU, Kai, Ningde, Fujian 352100 (CN); HUANG, Jiawei, Ningde, Fujian 352100 (CN); HE, Jia, Ningde, Fujian 352100 (CN); LIU, Yifei, Ningde, Fujian 352100 (CN)
(74) Representative: Gong, Jinping
(86) International application number: PCT/CN2023/120121
(87) International publication number: WO 2025/043786

(57) **Abstract**

A detection apparatus (400), a battery (100), and an electric apparatus are provided, pertaining to the field of detection technology. The detection apparatus (400) includes a base (410) and a sensor (420), where the base (410) includes one of a guide member and a sliding member. The sensor (420) is configured to be connected to the base (410), the sensor (420) includes a sensor shell, and the sensor shell includes the other of the guide member and the sliding member. The guide member is configured to guide a sliding direction of the sliding member to enable the sensor (420) to move relative to the base (410) along a first direction (Z), where the guide member includes a slide rail (411) and a groove (412), the sliding member includes a slider (421) and a protrusion (422), the slide rail (411) is configured to guide a sliding direction of the slider (421), and the groove (412) is configured to guide a sliding direction of the protrusion (422). The sensor (420) is connected to the base (410) and can move relative to the base (410) along the first direction (Z), so that when the detection apparatus (400) is subjected to impact or the like, the sensor (420) can move relative to the base (410) along the first direction (Z), reducing the probability of damage to the sensor (420).

## Description

### CROSS-REFERENCE TO RELATED APPLICATIONS

This application refers to Chinese Patent Application No. 202311094730.8, filed on August 29, 2023 and entitled "DETECTION APPARATUS, BATTERY, AND ELECTRIC APPARATUS", which is incorporated herein by reference in its entirety.

### TECHNICAL FIELD

This application relates to the field of detection technology, and in particular, to a detection apparatus, a battery, and an electric apparatus.

### BACKGROUND

Energy conservation and emission reduction are crucial to sustainable development of the automobile industry. Electric vehicles, with their advantages in energy conservation and emission reduction, have become an important part of sustainable development of the automobile industry. For electric vehicles, battery technology is an important factor in connection with their development.

As major manufacturers and user groups increasingly focus on the safety of electric vehicles, battery manufacturers have implemented stricter and more comprehensive management of potential defects during the use of batteries. During the use of a battery, if an electric vehicle is subjected to impact, sensors associated with the battery are prone to damage, which may cause safety hazards and affect the safety of the battery. Similarly, in industries other than the battery industry, sensors may also be prone to damage when subjected to impact. In the related art, there is still room for improvement in detection apparatuses.

### SUMMARY

This application aims to at least address one of the technical problems existing in the background art. To this end, an object of this application is to provide a detection apparatus, a battery, and an electric apparatus to reduce the probability of damage to a sensor when subjected to an impact.

According to a first aspect, an embodiment of this application provides a detection apparatus, where the detection apparatus includes a base and a sensor; the base includes one of a guide member and a sliding member; the sensor is configured to be connected to the base, the sensor includes a sensor shell, and the sensor shell includes the other of the guide member and the sliding member; and the guide member is configured to guide a sliding direction of the sliding member to enable the sensor to move relative to the base along a first direction; where the guide member includes a slide rail and a groove, the sliding member includes a slider and a protrusion, the slide rail is configured to guide a sliding direction of the slider, and the groove is configured to guide a sliding direction of the protrusion.

In the technical solution of this embodiment of this application, the sensor is connected to the base and can move relative to the base along the first direction, so that when the detection apparatus is subjected to impact or the like, the sensor can move relative to the base along the first direction, reducing the probability of damage to the sensor. In a method of allowing the sensor shell and the base to include one of the guide member and the sliding member, the guide member guides the sliding direction of the sliding member to enable the sensor to move along the first direction, which can reduce friction force between the sensor and the base, thereby improving the sensitivity of the sensor during movement, allowing the sensor to quickly move relative to the base along the first direction, and further reducing the probability of damage to the sensor. The groove guides the sliding direction of the protrusion to enable the sensor to move along the first direction, which can limit the movement distance and position of the sensor along the first direction, thereby improving the detection performance of the detection apparatus.

In some embodiments, the detection apparatus further includes an elastic element, and the elastic element is configured to apply an elastic force to the sensor along the first direction to limit a position of the sensor relative to the base. By using the elastic element to apply the elastic force to the sensor along the first direction to limit the position of the sensor relative to the base, shaking of the sensor due to vibration can be reduced, thereby improving the detection sensitivity of the sensor.

In some embodiments, the elastic element includes a spring. The spring has a simple structure, is reliable in use, and has a low cost. Selecting the spring as the elastic element of the detection apparatus can simplify the structure of the detection apparatus and reduce the cost of the detection apparatus.

In some embodiments, the base includes a guide structure configured to guide deformation of the spring. Guiding the deformation of the spring through the guide structure can make the structure of the detection apparatus more stable.

In some embodiments, the guide structure includes a cylindrical structure. Using the cylindrical structure as the guide structure of the elastic element can make the structure of the detection apparatus simpler.

In some embodiments, the elastic element includes a leaf spring. Using the leaf spring as the elastic element can make the elastic element easier to install, thereby further simplifying the structure of the detection apparatus.

In some embodiments, the base includes a snap-fit structure, and the base is connected to a sidewall of an installation environment of the detection apparatus via the snap-fit structure. The base is connected to the sidewall of the installation environment of the detection apparatus via the snap-fit structure, that is, the base is detachable, making the installation of the base more convenient. Additionally, the number of bases can be increased or decreased as needed, improving the installation flexibility of the detection apparatus and expanding the application range of the detection apparatus.

In some embodiments, the snap-fit structure is an asymmetrical structure with respect to any plane perpendicular to the first direction. Setting the snap-fit structure to the asymmetrical structure with respect to any plane perpendicular to the first direction facilitates installation when the base is installed on the sidewall of the installation environment of the detection apparatus, and ensures the correctness of an installation direction.

In some embodiments, the sensor includes a detection probe and a wire, where the detection probe is configured to detect whether a level of a liquid relative to a detection environment reaches a target height, and the wire is configured to transmit a detection signal to a control system. The detection probe is configured to detect whether the level of the liquid relative to the installation environment of the detection apparatus reaches the target height, and the wire is configured to transmit the detection signal to the control system so that a user can monitor the liquid conditions in the installation environment of the detection apparatus in a timely manner.

According to a second aspect, an embodiment of this application provides a battery including a battery housing and the detection apparatus according to any of the embodiments described above, where the base of the detection apparatus is mounted on an inner surface of a sidewall of the battery housing, and the first direction intersects with a bottom surface of the battery housing. The base is connected to the inner wall of the battery housing, and the sensor is connected to the base and can move relative to the base along the first direction intersecting with the bottom surface of the battery housing, so that when the bottom surface of the battery housing is subjected to impact or the like, the sensor can move relative to the base along the first direction, reducing the probability of damage to the sensor in the event of deformation of the battery housing.

In some embodiments, the sensor of the detection apparatus includes a liquid leakage detection sensor, where the liquid leakage detection sensor is configured to detect whether a leaked liquid within the battery housing reaches a target height relative to the bottom surface of the battery housing. The liquid leakage detection sensor is configured to detect whether the leaked liquid within the battery housing reaches the target height relative to the bottom surface of the battery housing, so that the state of the leaked liquid in the battery can be detected in a timely manner and reported in a timely manner when the leaked liquid reaches a predetermined height.

According to a third aspect, an embodiment of this application provides an electric apparatus including the battery according to the embodiments described above, where the battery is configured to provide electrical energy.

The above description is merely an overview of the technical solution of this application. To enable a clearer understanding of the technical means of this application such that they can be implemented according to the content of the specification, and to make the above and other objects, features, and advantages of this application more apparent and understandable, specific embodiments of this application are described below.

### BRIEF DESCRIPTION OF DRAWINGS

In the drawings, unless otherwise specified, identical reference signs throughout multiple drawings indicate identical or similar components or elements. These drawings are not necessarily drawn to scale. It should be understood that these drawings depict only some embodiments disclosed in accordance with this application and should not be considered as limiting the scope of this application. To more clearly illustrate the technical solutions of the embodiments of this application, the drawings required for use in the embodiments of this application are briefly introduced below. It is apparent that the drawings described below are merely some embodiments of this application, and those of ordinary skill in the art can obtain other drawings based on these drawings without creative effort.
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a schematic structural diagram of a detection apparatus according to some embodiments of this application;
FIG. 5 is a schematic structural diagram of a sensor according to some embodiments of this application;
FIG. 6 is a schematic structural diagram of a base according to some embodiments of this application;
FIG. 7 is an exploded view of a detection apparatus according to some embodiments of this application;
FIG. 8 is a top view of FIG. 7;
FIG. 9 is a schematic structural diagram of another detection apparatus according to some embodiments of this application; and
FIG. 10 is a left view of FIG. 4.

Description of reference signs:
1000. vehicle;
100. battery; 200. controller; 300. motor;
10. box; 11. first portion; 12. second portion;
20. battery cell; 21. end cap; 21a. electrode terminal; 22. housing; 23. cell assembly; 23a. tab;
400. detection apparatus; 410. base; 420. sensor; 430. elastic element; 421. slider; 422. protrusion; 423. detection probe; 424. wire; 411. slide rail; 412. groove; 413. snap-fit structure; and 414. cylindrical structure.

### DESCRIPTION OF EMBODIMENTS

The embodiments of the technical solutions of this application will be described in detail below in conjunction with the drawings. The following embodiments are merely used to more clearly illustrate the technical solutions of this application and thus serve only as examples, and cannot be used to limit the scope of protection of this application.

Unless otherwise defined, all technical and scientific terms used herein have the same meanings as commonly understood by those skilled in the art of this application; the terms used herein are for the purpose of describing specific embodiments only and are not intended to limit this application; the terms "include", "comprise", "have", and any variations thereof in the specification, claims, and the above description of the drawings of this application are intended to cover non-exclusive inclusion.

In the description of the embodiments of this application, technical terms such as "first" and "second" are used only to distinguish different objects and should not be understood as indicating or implying relative importance or implicitly indicating the number, specific order, or primary-secondary relationship of the indicated technical features. In the description of the embodiments of this application, "multiple" means two or more, unless otherwise explicitly and specifically defined.

Reference to "embodiment" herein means that specific features, structures, or characteristics described in conjunction with the embodiment may be included in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the description of the embodiments of this application, the term "and/or" merely describes an association relationship of associated objects, indicating that three relationships may exist. For example, A and/or B may indicate the following three cases: presence of only A; presence of both A and B; and presence of only B. In addition, the character "/" in this specification generally indicates an "or" relationship between the contextually associated objects.

In the description of the embodiments of this application, the term "multiple" refers to two or more (including two), and similarly, "multiple groups" refers to two or more groups (including two groups), and "multiple pieces" refers to two or more pieces (including two pieces).

In the description of the embodiments of this application, technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" indicate orientations or positional relationships based on the orientations or positional relationships shown in the drawings, and are merely for the convenience of describing the embodiments of this application and simplifying the description, rather than indicating or implying that the referred device or element must have a specific orientation, be constructed, and operate in a specific orientation, and therefore should not be understood as limiting the embodiments of this application.

In the description of the embodiments of this application, unless otherwise explicitly specified and defined, technical terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection through an intermediary, an internal communication between two elements, or an interaction between two elements. Those skilled in the art can understand the specific meanings of the above terms in the embodiments of this application based on specific circumstances.

Currently, from the perspective of market development, the application of traction batteries is becoming increasingly widespread. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of the application fields of traction batteries, the market demand for them is also continuously increasing.

Taking the application of batteries in new energy vehicles as an example, during the use of batteries, to monitor the batteries, a detection apparatus formed by a flexible film circuit is used in the related art. The detection apparatus is adhered to the battery through an adhesive, and its position is fixed after adhesion. However, when the battery bottom deforms due to conditions such as bottom impact or scraping, such a detection apparatus is prone to damage.

Based on the above considerations, to address the issue of the detection apparatus being prone to damage, a sensor is connected to a base and can move relative to the base along a first direction, so that the sensor can move relative to the base along the first direction when the detection apparatus is subjected to impact or the like, thereby reducing the probability of damage to the sensor.

The detection apparatus disclosed in the embodiments of this application can be used in the battery manufacturing process, and the detected or produced batteries can be used without limitation in electric apparatuses such as vehicles, ships, or aircraft. A power system for the electric apparatus can be formed by the battery disclosed in this application.

For ease of description, an electric apparatus according to an embodiment of this application being a vehicle 1000 is used as an example for description of the following embodiments.

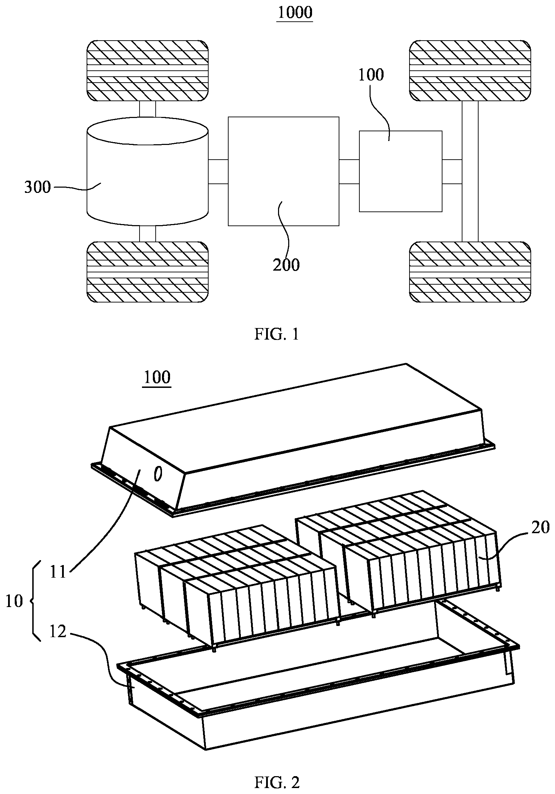

Referring to FIG. 1, FIG. 1 is a schematic structural diagram of a vehicle 1000 according to some embodiments of this application. The vehicle 1000 may be a fuel vehicle, a gas vehicle, or a new energy vehicle, and the new energy vehicle may be a battery electric vehicle, a hybrid vehicle, or an extended-range vehicle, etc. A battery 100 is provided inside the vehicle 1000, and the battery 100 may be disposed at the bottom, head, or tail of the vehicle 1000. The battery 100 may be configured to supply power to the vehicle 1000. For example, the battery 100 may serve as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 may serve not only as an operational power source for the vehicle 1000 but also as a driving power source for the vehicle 1000, replacing or partially replacing fuel or natural gas to provide driving traction for the vehicle 1000.

Referring to FIG. 2, FIG. 2 is a schematic structural exploded view of a battery according to some embodiments of this application. The battery 100 includes a box 10 and a battery cell 20, where the battery cell 20 is accommodated within the box 10. The box 10 is configured to provide an accommodation space for the battery cell 20, and the box 10 may adopt various structures. In some embodiments, the box 10 may include a first portion 11 and a second portion 12, where the first portion 11 and the second portion 12 fit each other, such that the first portion 11 and the second portion 12 together define an accommodation space for accommodating the battery cell 20. The second portion 12 may be a hollow structure with an opening at one end, and the first portion 11 may be a plate-like structure. The first portion 11 covers the opening side of the second portion 12, so that the first portion 11 and the second portion 12 together define the accommodation space. The first portion 11 and the second portion 12 may alternatively each be a hollow structure with an opening at one side. The opening side of the first portion 11 covers the opening side of the second portion 12. Certainly, the box 10 formed by the first portion 11 and the second portion 12 may have various shapes such as a cylinder shape and a cuboid shape.

In the battery 100, multiple battery cells 20 may be provided, and the multiple battery cells 20 may be connected in series, parallel, or series-parallel, where being connected in series-parallel means a combination of series and parallel connections of the multiple battery cells 20. The multiple battery cells 20 may be directly connected in series, parallel, or series-parallel, and an entirety formed by the multiple battery cells 20 is accommodated within the box 10. Certainly, the battery 100 may alternatively be formed in a manner that multiple battery cells 20 are connected in series, parallel or series-parallel first to form a battery module and then multiple battery modules are connected in series, parallel or series-parallel to form an entirety which is accommodated within the box 10. The battery 100 may further include other structures. For example, the battery 100 may further include a busbar configured to implement an electrical connection between the multiple battery cells 20.

Each battery cell 20 may be a secondary battery or a primary battery, or may be a lithium-sulfur battery, a sodium-ion battery, or a magnesium-ion battery, without being limited thereto. The battery cell 20 may be may be cylindrical, flat, cuboid, or of other shapes.

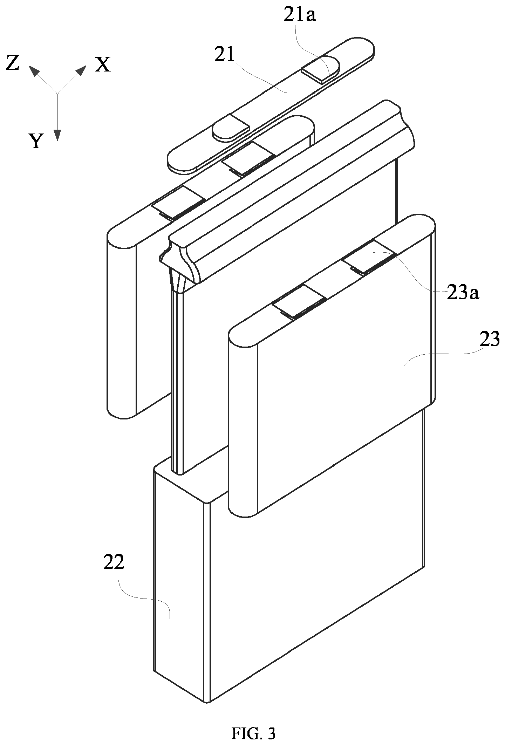

Referring to FIG. 3, FIG. 3 is a schematic structural exploded view of a battery cell 20 according to some embodiments of this application. The battery cell 20 refers to the smallest unit constituting the battery. As shown in FIG. 3, the battery cell 20 includes an end cap 21, a housing 22, a cell assembly 23, and other functional components.

The end cap 21 refers to a component that covers an opening of the housing 22 to isolate an internal environment of the battery cell 20 from an external environment. Without limitation, the shape of the end cap 21 may be adapted to the shape of the housing 22 to fit the housing 22. Optionally, the end cap 21 may be made of a material with a certain hardness and strength (such as an aluminum alloy), so that the end cap 21 is less likely to deform when subjected to compression or collision, enabling the battery cell 20 to have higher structural strength and improved safety performance. Functional components such as an electrode terminal 21a may be disposed on the end cap 21. The electrode terminal 21a may be configured to be electrically connected to the cell assembly 23 to output or input electrical energy of the battery cell 20. In some embodiments, the end cap 21 may also be provided with a pressure relief mechanism for releasing internal pressure when the internal pressure or temperature of the battery cell 20 reaches a threshold. The end cap 21 may alternatively be made of various materials such as copper, iron, aluminum, stainless steel, aluminum alloy, and plastic. In some embodiments, an insulating member may also be disposed on an inner side of the end cap 21, where the insulating member may be configured to isolate electrical connection components within the housing 22 from the end cap 21 to reduce the risk of short circuits. For example, the insulating member may be plastic, rubber, or the like.

The housing 22 is a component configured to cooperate with the end cap 21 to form an internal environment of the battery cell 20, where the formed internal environment can be used for accommodating a cell assembly 23, an electrolyte, and other components. The housing 22 and the end cap 21 may be independent components. The housing 22 may be provided with an opening, and the end cap 21 covers the opening to form the internal environment of the battery cell 20. Without limitation, the end cap 21 and the housing 22 may alternatively be integrated. Specifically, the end cap 21 and the housing 22 may form a common connection surface before other components are inserted into the housing, and when the interior of the housing 22 needs to be sealed, the end cap 21 covers the housing 22. The housing 22 may have various shapes and sizes, such as a cuboid shape, a cylinder shape, a hexagonal prism shape. Specifically, the shape of the housing 22 may be determined based on the specific shape and size of the cell assembly 23. The housing 22 may be made of various materials such as copper, iron, aluminum, stainless steel, aluminum alloy, and plastic.

The cell assembly 23 is a component in the battery cell 20 where an electrochemical reaction occurs. One or more cell assemblies 23 may be provided in the housing 22. The cell assembly 23 is mainly formed by winding or stacking a positive electrode plate and a negative electrode plate, and a separator is typically disposed between the positive electrode plate and the negative electrode plate. Portions of the positive electrode plate and the negative electrode plate with active materials constitute a main body portion of the cell assembly, and portions of the positive electrode plate and the negative electrode plate without active materials each constitute a tab 23a. A positive electrode tab and a negative electrode tab may be located together at one end of the main body portion or respectively located at both ends of the main body portion. During the charging and discharging of the battery, a positive electrode active material and a negative electrode active material react with the electrolyte, and the tab 23a is connected to the electrode terminal to form a current loop.

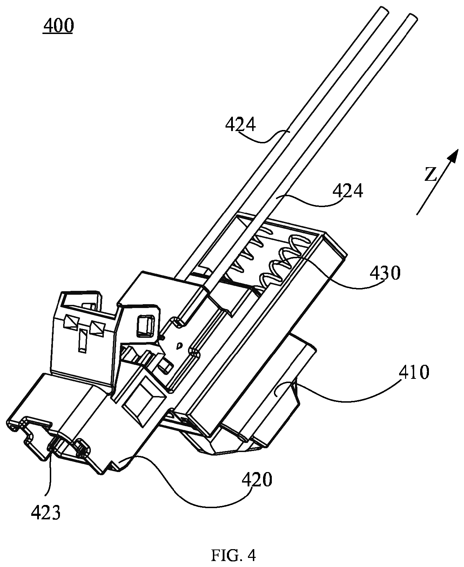

An embodiment of this application provides a detection apparatus. FIG. 4 is a schematic structural diagram of a detection apparatus according to some embodiments of this application. As shown in FIG. 4, the detection apparatus 400 includes a base 410 and a sensor 420. The base 410 includes one of a guide member and a sliding member. The sensor 420 is configured to be connected to the base 410, the sensor 420 includes a sensor shell, and the sensor shell includes the other of the guide member and the sliding member. The guide member is configured to guide a sliding direction of the sliding member to enable the sensor 420 to move relative to the base 410 along a first direction Z, where the guide member includes a slide rail 411 and a groove 412. The sliding member includes a slider 421 and a protrusion 422. The slide rail 411 is configured to guide a sliding direction of the slider 421. The groove 412 is configured to guide a sliding direction of the protrusion 422.

In this embodiment of this application, the sensor 420 is movably connected to the base 410 to ensure that the sensor 420 can move relative to the base 410 along the first direction Z. For example, the sensor 420 and the base 410 may be connected to each other through a slide rail and a slide groove, or the sensor 420 and the base 410 may be connected to each other through a slide rail and a slider as well as a protrusion and a groove. As shown in FIG. 4, the sensor 420 can move relative to the base 410 along the first direction Z.

In this embodiment of this application, the sensor 420 is connected to the base 410 and can move relative to the base 410 along the first direction Z, so that when the detection apparatus 400 is subjected to impact or the like, the sensor 420 can move relative to the base 410 along the first direction Z, reducing the probability of damage to the sensor 420.

In this embodiment of this application, one of the sensor shell and the base 410 may include the guide member, and the other may include the sliding member, where the guide member is configured to guide the sliding direction of the sliding member, thereby achieving a sliding connection effect between the sensor 420 and the base 410.

In this embodiment of this application, in a method of allowing the sensor shell and the base 410 to include one of the guide member and the sliding member, the guide member guides the sliding direction of the sliding member to enable the sensor to move along the first direction Z, which can reduce friction force between the sensor 420 and the base 410, thereby improving the sensitivity of the sensor 420 during movement, allowing the sensor 420 to quickly move relative to the base 410 along the first direction Z, and further reducing the probability of damage to the sensor 420.

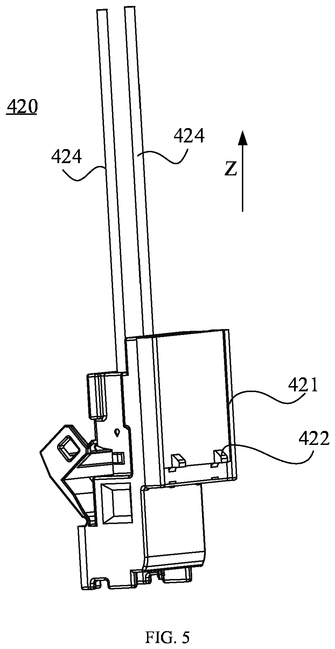

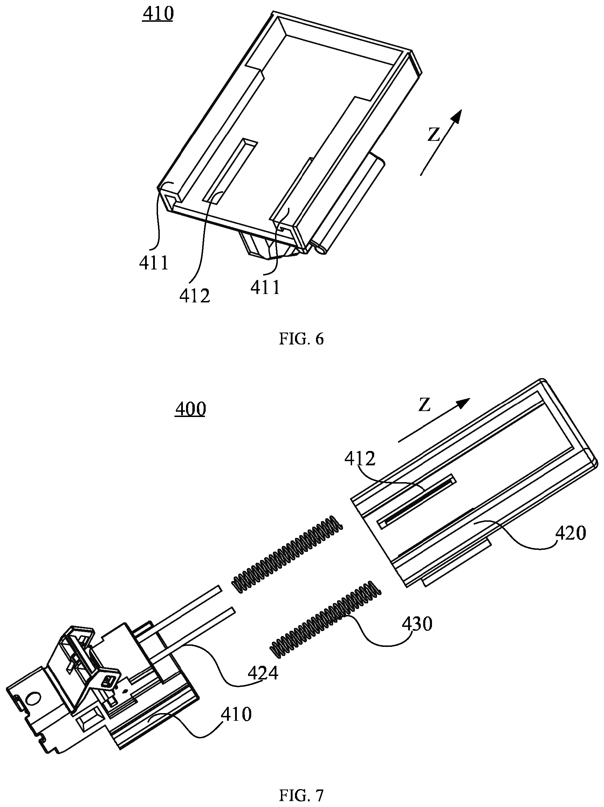

According to some embodiments of this application, the guide member includes a slide rail 411, and the sliding member includes a slider 421. The slide rail 411 guides the sliding direction of the slider 421 to enable the sensor 420 to move along the first direction Z. For example, FIG. 5 is a schematic structural diagram of a sensor according to some embodiments of this application, and FIG. 6 is a schematic structural diagram of a base according to some embodiments of this application. As shown in FIG. 5, the sensor 420 includes a sensor shell, where the sensor shell includes slide rails 411, and the number of slide rails 411 is two. As shown in FIG. 6, the base 410 includes sliders 421. The number of sliders 421 is the same as the number of slide rails 411. The slide rails 411 guide sliding directions of the sliders 421 to enable the sensor 420 to move along the first direction Z.

In these embodiments of this application, the guide member adopts the slide rail 411, and the sliding member adopts the slider 421. The slide rail 411 guides the sliding direction of the slider 421 to enable the sensor 420 to move along the first direction Z, simplifying the structure of the detection apparatus 400.

According to some embodiments of this application, the guide member includes a groove 412, and the sliding member includes a protrusion 422. The groove 412 guides the sliding direction of the protrusion 422 to enable the sensor 420 to move along the first direction Z. For example, FIG. 5 is a schematic structural diagram of a sensor according to some embodiments of this application, and FIG. 6 is a schematic structural diagram of a base according to some embodiments of this application. As shown in FIG. 5, the sensor 420 includes a sensor shell, where the sensor shell includes protrusions 422, and the number of protrusions 422 is two. As shown in FIG. 6, the base 410 includes grooves 412. The number of protrusions 422 is the same as the number of grooves 412, and the grooves 412 guide sliding directions of the protrusions 422 to enable the sensor 420 to move along the first direction Z.

In these embodiments of this application, a position of the groove 412 on the base 410 and the length of the groove 412 along the first direction Z together define a movement range of the sensor 420 along the first direction Z, while also enabling the sensor 420 to remain connected to the base 410 when moving along the first direction Z.

In these embodiments of this application, the groove 412 guides the sliding direction of the protrusion 422 to enable the sensor 420 to move along the first direction Z, which can limit a movement distance and position of the sensor 420 along the first direction Z, thereby improving the detection performance of the detection apparatus 400.

According to some embodiments of this application, the detection apparatus 400 further includes an elastic element 430, where the elastic element 430 is configured to apply an elastic force to the sensor 420 along the first direction Z to limit a position of the sensor 420 relative to the base 410.

In these embodiments of this application, when the sensor 420 moves relative to the base 410 along the first direction Z, the detection apparatus 400 is typically subjected to impact, and the sensor 420 may shake due to vibration. This issue can be addressed by installing the elastic element 430 on the detection apparatus 400. The elastic element 430 can apply an elastic force to the sensor 420 along the first direction Z to limit the position of the sensor 420 relative to the base 410.

As shown in FIG. 4, one end of the elastic element 430 abuts against the sensor 420, and the other end thereof abuts against the base 410. The elastic element 430 applies an elastic force to the sensor 420 along the first direction Z to limit the position of the sensor 420 relative to the base 410.

In these embodiments of this application, by using the elastic element 430 to apply the elastic force to the sensor 420 along the first direction Z to limit the position of the sensor 420 relative to the base 410, shaking of the sensor 420 due to vibration can be reduced, thereby improving the detection sensitivity of the sensor 420.

According to some embodiments of this application, the elastic element 430 includes a spring.

In these embodiments of this application, the spring undergoes significant elastic deformation when loaded, converting mechanical work or kinetic energy into deformation energy. Upon unloading, the deformation of the spring disappears and the spring returns to its original state, while the deformation energy is converted into mechanical work or kinetic energy.

In these embodiments of this application, the spring has a simple structure, is reliable in use, and has a low cost. Selecting the spring as the elastic element 430 of the detection apparatus 400 can simplify the structure of the detection apparatus 400 and reduce the cost of the detection apparatus 400.

According to some embodiments of this application, the base 410 includes a guide structure configured to guide deformation of the spring.

In these embodiments of this application, the guide structure may be a guide rod, a cylindrical structure, or the like. The guide structure cooperates with the spring to restrict a movement direction of the spring. For example, the spring may be sleeved on the guide structure, and the spring can move through the guide structure.

In these embodiments of this application, guiding the deformation of the spring through the guide structure can make the structure of the detection apparatus 400 more stable.

According to some embodiments of this application, the guide structure includes a cylindrical structure 414.

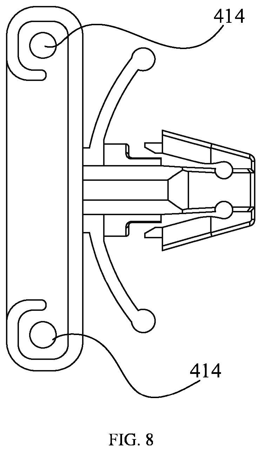

For example, FIG. 7 is an exploded view of a detection apparatus according to some embodiments of this application, and FIG. 8 is a top view of FIG. 7. As shown in FIG. 8, the guide structure is a cylindrical structure 414.

In these embodiments of this application, using the cylindrical structure 414 as the guide structure of the elastic element 430 can make the structure of the detection apparatus 400 simpler.

According to some embodiments of this application, the elastic element 430 includes a leaf spring.

In these embodiments of this application, the leaf spring can absorb vibration and impact energy and can also control mechanical movement. The leaf spring can be easily integrated into the detection apparatus 400 to interact with the sensor 420 and the base 410, and is configured to apply an elastic force to the sensor 420 along the first direction Z to limit the position of the sensor 420 relative to the base 410.

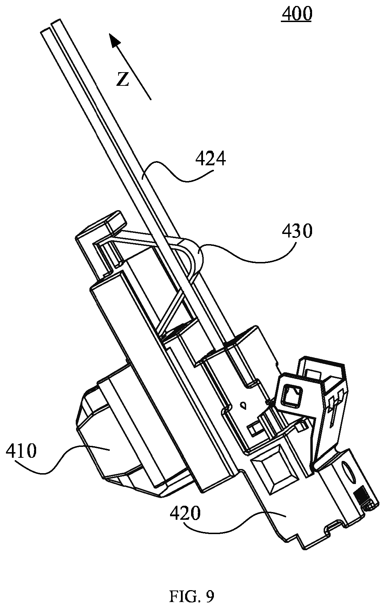

For example, FIG. 9 is a schematic structural diagram of another detection apparatus according to some embodiments of this application. As shown in FIG. 9, the elastic element 430 is a leaf spring.

In these embodiments of this application, using the leaf spring as the elastic element 430 can make the elastic element 430 easier to install, thereby further simplifying the structure of the detection apparatus 400.

According to some embodiments of this application, the base 410 includes a snap-fit structure, and the base 410 is connected to a sidewall of an installation environment of the detection apparatus 400 via the snap-fit structure 413.

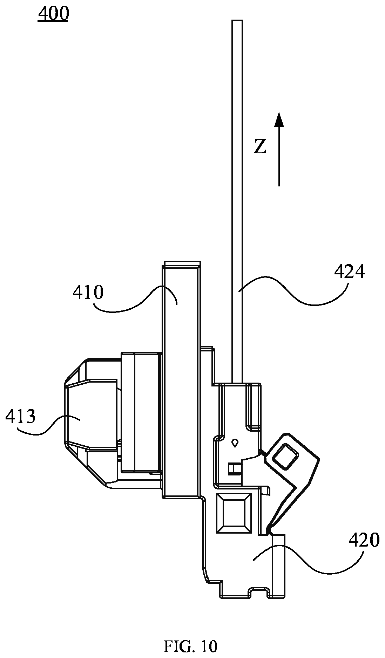

For example, FIG. 10 is a left view of FIG. 4. As shown in FIG. 10, the base 410 includes a snap-fit structure, and the base 410 can be connected to the sidewall of the installation environment of the detection apparatus 400 via the snap-fit structure 413, where an inner side of the battery housing is provided with a waist-shaped hole.

In these embodiments of this application, the base 410 is connected to the sidewall of the installation environment of the detection apparatus 400 via the snap-fit structure 413, that is, the base 410 is detachable, making the installation of the base 410 more convenient. Additionally, the number of bases 410 can be increased or decreased as needed, improving the installation flexibility of the detection apparatus 400 and expanding the application range of the detection apparatus 400.

According to some embodiments of this application, the snap-fit structure 413 is an asymmetrical structure with respect to any plane perpendicular to the first direction Z.

In these embodiments of this application, setting the snap-fit structure 413 to be the asymmetrical structure with respect to any plane perpendicular to the first direction Z facilitates installation when the base 410 is installed on the sidewall of the installation environment of the detection apparatus 400, and ensures the correctness of an installation direction.

According to some embodiments of this application, as shown in FIG. 4, the sensor 420 includes a detection probe 423 and a wire 424, where the detection probe 423 is configured to detect whether a level of a liquid relative to a detection environment reaches a target height, and the wire 424 is configured to transmit a detection signal to a control system.

In these embodiments of this application, the number of detection probes 423 may be two. The detection probes 423 are normally in an open circuit state, and when encountering a cooling liquid, the equivalent resistance or equivalent capacitance between the detection probes 423 vary. Variable resistance signal values or capacitance signal values are transmitted to the control system via the wire 424, thereby conveying liquid detection results. In an example where the sensor 420 is a resistive detection sensor 420, the insulation resistance between the detection probes 423 may vary with different liquid levels. When there is no liquid, the resistance between the detection probes 423 may be infinite.

In these embodiments of this application, the detection signal may include whether the level of the liquid in the installation environment of the detection apparatus 400 reaches the target height.

In these embodiments of this application, the detection probe 423 is configured to detect whether the level of the liquid relative to the installation environment of the detection apparatus 400 reaches the target height, and the wire 424 is configured to transmit the detection signal to the control system, so that a user can monitor the liquid conditions in the installation environment of the detection apparatus 400 in a timely manner.

An embodiment of this application provides a battery including a battery housing and the detection apparatus 400 according to any of the embodiments described above, where the base 410 of the detection apparatus 400 is mounted on an inner surface of a sidewall of the battery housing, and the first direction intersects with a bottom surface of the battery housing.

In this embodiment of this application, the battery may be applied without limitation to a mobile phone, a tablet, a notebook computer, an electric toy, an electric tool, an electric bicycle, an electric vehicle, a ship, a spacecraft, and the like. The electric toy may include a fixed or mobile electric toy, such as a game console, an electric toy car, an electric toy ship, and an electric toy airplane. The spacecraft may include an airplane, a rocket, a space shuttle, and a spaceship, and the like.

In this embodiment of this application, the base 410 may be connected to an inner wall near the bottom surface of the battery housing. The base 410 may be fixedly connected to an inner wall of the battery housing; or the base 410 may be connected to the inner wall of the battery housing in a detachable manner such as a snap-fit connection manner. The number of bases 410 may be multiple, and the multiple bases 410 are arranged at intervals on the inner wall of the battery housing.

In this embodiment of this application, the sensor 420 is movably connected to the base 410 to ensure that the sensor 420 can move relative to the base 410 along the first direction Z intersecting with the bottom surface of the battery housing.

In this embodiment of this application, the base 410 is connected to the inner wall of the battery housing, and the sensor 420 is connected to the base 410 and can move relative to the base 410 along the first direction intersecting with the bottom surface of the battery housing, so that when the bottom surface of the battery housing is subjected to impact or the like, the sensor 420 can move relative to the base 410 along the first direction, reducing the probability of damage to the sensor 420 in the event of deformation of the battery housing.

According to some embodiments of this application, the sensor 420 of the detection apparatus 400 includes a liquid leakage detection sensor, where the liquid leakage detection sensor is configured to detect whether a leaked liquid within the battery housing reaches a target height relative to the bottom surface of the battery housing.

In these embodiments of this application, the liquid leakage detection sensor 420 can detect electrolyte leakage in the battery and issue an alert signal in a timely manner, thereby ensuring the safety and stability of the battery during use. Depending on different detection principles, the liquid leakage detection sensor 420 may be divided into a capacitive liquid leakage detection sensor, a resistive liquid leakage detection sensor, and the like.

In these embodiments of this application, the liquid leakage detection sensor is configured to detect whether the leaked liquid within the battery housing reaches the target height relative to the bottom surface of the battery housing, so that the state of the leaked liquid in the battery can be detected in a timely manner and reported in a timely manner when the leaked liquid reaches a predetermined height.

An embodiment of this application provides an electric apparatus including the battery according to the embodiments described above, where the battery is configured to provide electrical energy.

In this embodiment of this application, the electric apparatus may be but is not limited to a mobile phone, a tablet, a notebook computer, an electric toy, an electric tool, an electric bicycle, an electric vehicle, a ship, a spacecraft. The electric toy may include a fixed or mobile electric toy, such as a game console, an electric toy car, an electric toy ship, and an electric toy airplane. The spacecraft may include an airplane, a rocket, a space shuttle, and a spaceship.

Using the electric apparatus of the embodiments of this application can reduce the probability of damage to the liquid leakage detection sensor 420 in the event of deformation of the battery housing, allowing the liquid leakage detection sensor 420 to still be configured to perform liquid leakage detection when the battery housing is subjected to impact deformation, thereby improving the safety of the electric apparatus.

The technical solution of this application is further described below through a specific embodiment. As shown in FIG. 4 to FIG. 10, the detection apparatus 400 includes a base 410 and a sensor 420. The sensor 420 is configured to be connected to the base 410 and can move relative to the base 410 along a first direction Z.

The sensor 420 includes a sensor shell, where the sensor shell includes one of a guide member and a sliding member, and the base 410 includes the other of the guide member and the sliding member. The guide member is configured to guide a sliding direction of the sliding member to enable the sensor 420 to move along the first direction Z. The guide member includes a slide rail 411 and a groove 412, and the sliding member includes a slider 421 and a protrusion 422.

The detection apparatus 400 further includes an elastic element 430, where the elastic element 430 is configured to apply an elastic force to the sensor 420 along the first direction Z to limit a position of the sensor 420 relative to the base 410. The elastic element 430 includes a spring. The base 410 includes a guide structure configured to guide deformation of the spring, where the guide structure includes a cylindrical structure 414. The elastic element 430 includes a leaf spring.

The base 410 includes a snap-fit structure. The base 410 is connected to a sidewall of an installation environment of the detection apparatus 400 via the snap-fit structure 413. The snap-fit structure 413 is an asymmetrical structure with respect to any plane perpendicular to the first direction Z.

The sensor 420 includes a detection probe 423 and a wire 424, where the detection probe 423 is configured to detect whether a level of a liquid relative to a detection environment reaches a target height. The wire 424 is configured to transmit a detection signal to a control system.

Finally, it should be noted that the above embodiments are only used to illustrate the technical solutions of this application and not to limit them; although this application has been described in detail with reference to the foregoing embodiments, those of ordinary skill in the art should understand that they can still modify the technical solutions described in the foregoing embodiments or make equivalent substitutions for some or all of the technical features; and these modifications or substitutions do not make the essence of the corresponding technical solutions depart from the scope of the technical solutions of the embodiments of this application, and they should all fall within the scope of the claims and specification of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A detection apparatus, comprising:
a base, the base comprising one of a guide member and a sliding member; and
a sensor configured to be connected to the base, wherein the sensor comprises a sensor shell, the sensor shell comprises the other of the guide member and the sliding member, and the guide member is configured to guide a sliding direction of the sliding member to enable the sensor to move relative to the base along a first direction;
wherein the guide member comprises a slide rail and a groove, the sliding member comprises a slider and a protrusion, the slide rail is configured to guide a sliding direction of the slider, and the groove is configured to guide a sliding direction of the protrusion.

2. The detection apparatus according to claim 1, wherein the detection apparatus further comprises an elastic element, and the elastic element is configured to apply an elastic force to the sensor along the first direction to limit a position of the sensor relative to the base.

3. The detection apparatus according to claim 2, wherein the elastic element comprises a spring.

4. The detection apparatus according to claim 3, wherein the base comprises a guide structure configured to guide deformation of the spring.

5. The detection apparatus according to claim 4, wherein the guide structure comprises a cylindrical structure.

6. The detection apparatus according to claim 2, wherein the elastic element comprises a leaf spring.

7. The detection apparatus according to any one of claims 1 to 6, wherein the base comprises a snap-fit structure, and the base is capable of being connected to a sidewall of an installation environment of the detection apparatus via the snap-fit structure.

8. The detection apparatus according to claim 7, wherein the snap-fit structure is an asymmetrical structure with respect to any plane perpendicular to the first direction.

9. The detection apparatus according to any one of claims 1 to 8, wherein the sensor comprises a detection probe and a wire, the detection probe is configured to detect whether a level of a liquid relative to an installation environment of the detection apparatus reaches a target height, and the wire is configured to transmit a detection signal to a control system.

10. A battery, comprising:
a battery housing; and
the detection apparatus according to any one of claims 1 to 9, wherein the base of the detection apparatus is mounted on an inner surface of a sidewall of the battery housing, and the first direction intersects with a bottom surface of the battery housing.

11. The battery according to claim 10, wherein the sensor of the detection apparatus comprises a liquid leakage detection sensor, and the liquid leakage detection sensor is configured to detect whether a leaked liquid within the battery housing reaches a target height relative to the bottom surface of the battery housing.

12. An electric apparatus, wherein the electric apparatus comprises the battery according to claim 10 or 11, wherein the battery is configured to provide electrical energy.
